# EUROPEAN PATENT APPLICATION

(11) **EP 3 694 199 A1**
(43) Date of publication of application: **12.08.2020**
(21) Application number: 18864185.6
(22) Date of filing: 28.09.2018
(51) Int. Cl.: H04M 9/00, G06F 13/00, H04M 11/00

(54) **INTERPHONE MASTER UNIT, INFORMATION TERMINAL, DISTRIBUTION NOTIFICATION SYSTEM, DISTRIBUTION SYSTEM, PROGRAM, AND CONTROL METHOD**

(30) Priority: 04.10.2017 JP 2017194497
(71) Applicant: Panasonic Intellectual Property Management Co., Ltd., Osaka-shi, Osaka 540-6207 (JP)
(72) Inventor: SATO, Kazuki, Osaka-shi, Osaka 540-6207 (JP)
(74) Representative: Appelt, Christian W.
(86) International application number: PCT/JP2018/036263
(87) International publication number: WO 2019/069808

(57) **Abstract**

An object of the present disclosure to provide an intercom indoor station, a telecommunications device, a delivery notification system, a delivery system, a program, and a control method, all of which are configured or designed to reduce a communication load on a trunk line while guaranteeing security. The intercom indoor station (10) is installed in each of a plurality of management areas (5) that a facility (2) has and connected to a trunk line (LI) of an intercom line. The intercom indoor station (10) includes a first acquisition unit (101) and a second acquisition unit (102). The first acquisition unit (101) receives, through the trunk line (LI), notification information about delivery of content information. The second acquisition unit (102) receives, through a communication path other than the trunk line (L1), the content information corresponding to the notification information.

## Description

### Technical Field

The present disclosure generally relates to an intercom indoor station, a telecommunications device, a delivery notification system, a delivery system, a program, and a control method. More particularly, the present disclosure relates to an intercom indoor station, a telecommunications device with the capability of communicating with the intercom indoor station, a delivery notification system for making delivery notification through an intercom trunk line, and a delivery system including a plurality of intercom indoor stations and the delivery notification system. The present disclosure also relates to a program designed to cause a computer system to perform the functions of the intercom indoor station, the telecommunications device, and the delivery notification system, and further relates to a method for controlling the delivery notification system.

### Background Art

Patent Literature 1 discloses a known intercom system for multi-family dwelling houses. The intercom system for multi-family dwelling houses includes: dwelling-unit stations (intercom indoor stations) installed in respective dwelling units; a trunk line connected to a lobby intercom station; dwelling-unit lines branching from the trunk line to be connected to the respective dwelling-unit stations; and a controller connected to the trunk line to control the overall system. The intercom system for multi-family dwelling houses further includes: a network device for connecting the respective dwelling-unit stations to a wide area network through the trunk line: and a server device for holding various types of web content to be delivered to the respective dwelling units of the multi-family dwelling house.

The intercom system according to Patent Literature 1 allows a networked home appliance installed in each dwelling unit to acquire and display any of the various types of web content for those dwelling units by itself through its associated dwelling-unit station and the trunk line, even without directly accessing the server device that owns those types of web content.

### Citation List

### Patent Literature

Patent Literature 1: JP 2010-177818 A

### Summary of Invention

In the intercom system for multi-family dwelling houses disclosed in Patent Literature 1, the data of a web content requested (hereinafter referred to as "content information") flows through the trunk line to be delivered to a dwelling-unit station (intercom indoor station). According to this configuration, when content information with a relatively large data size (e.g., content information including a still picture or a moving picture) is delivered, a relatively heavy communication load is imposed on the trunk line (i.e., the traffic through the trunk line increases). Particularly when two persons are speaking to each other over a dwelling-unit station and the lobby intercom station, audio information and video information are transmitted through the trunk line. That is why if any piece of content information is delivered through the trunk line while the two persons are speaking to each other, the traffic through the trunk lines could increase significantly.

Meanwhile, the communication load on the trunk line may be reduced by making the networked home appliance directly access the server device simply through another communication path provided separately from the trunk line. Nevertheless, in such a situation, the provider who delivers the content information could be accessed by a networked home appliance, of which the reliability is not guaranteed, thus causing concern about a decline in security.

It is therefore an object of the present disclosure to provide an intercom indoor station, a telecommunications device, a delivery notification system, a delivery system, a program, and a control method, all of which are configured or designed to reduce the communication load on the trunk line while guaranteeing security.

An intercom indoor station according to an aspect of the present disclosure is installed in each of a plurality of management areas that a facility has and connected to a trunk line of an intercom line. The intercom indoor station includes: a first acquisition unit to receive, through the trunk line, notification information about delivery of content information; and a second acquisition unit to receive, through a communication path other than the trunk line, the content information corresponding to the notification information.

A telecommunications device according to another aspect of the present disclosure has the ability to communicate with an intercom indoor station installed in each of a plurality of management areas that a facility has and connected to a trunk line of an intercom line. The telecommunications device includes a notification acquisition unit and a content acquisition unit. The notification acquisition unit receives, from the intercom indoor station, notification information about delivery of content information. The notification information has been received by the intercom indoor station through the trunk line. The content acquisition unit receives, through a communication path other than the trunk line, the content information corresponding to the notification information.

A delivery notification system according to still another aspect of the present disclosure makes delivery notification through a trunk line of an intercom line, to which a plurality of intercom indoor stations are connected in a facility having a plurality of management areas. The delivery notification system includes: a generation unit to generate notification information about delivery of content information; and a sending unit to send out, through the trunk line, the notification information that has been generated by the generation unit.

A delivery system according to yet another aspect of the present disclosure includes: a plurality of the intercom indoor stations described above; and the delivery notification system described above.

A program according to yet another aspect of the present disclosure is designed to cause a computer system to perform functions of an intercom indoor station installed in each of a plurality of management areas that a facility has and connected to a trunk line of an intercom line. The program includes the steps of: receiving, through the trunk line, notification information about delivery of content information; and receiving, through a communication path other than the trunk line, the content information corresponding to the notification information.

A program according to yet another aspect of the present disclosure is designed to cause a computer system to perform functions of a telecommunications device with the ability to communicate with an intercom indoor station installed in each of a plurality of management areas that a facility has and connected to a trunk line of an intercom line. The program includes the step of receiving, from the intercom indoor station, notification information about delivery of content information. The notification information has been received by the intercom indoor station through the trunk line. The program further includes the step of receiving, through a communication path other than the trunk line, the content information corresponding to the notification information.

A program according to yet another aspect of the present disclosure is designed to cause a computer system to perform functions of a delivery notification system for making delivery notification through a trunk line of an intercom line, to which a plurality of intercom indoor stations are connected in a facility having a plurality of management areas. The program includes the steps of: generating notification information about delivery of content information; and sending out, through the trunk line, the notification information that has been generated.

A control method according to yet another aspect of the present disclosure is a method for controlling a delivery notification system that makes delivery notification through a trunk line of an intercom line, to which a plurality of intercom indoor stations are connected in a facility having a plurality of management areas. The control method includes: generating notification information about delivery of content information; and sending out, through the trunk line, the notification information that has been generated.

### Brief Description of Drawings

FIG. 1 illustrates a system configuration for a delivery system according to an exemplary embodiment;
FIG. 2 is a block diagram illustrating a configuration for an intercom indoor station according to the exemplary embodiment;
FIG. 3 is a block diagram illustrating a configuration for a controller of a delivery notification system according to the exemplary embodiment;
FIG. 4 is a block diagram illustrating a configuration for a telecommunications device according to the exemplary embodiment; and
FIG. 5 is a flowchart illustrating how the intercom indoor station performs a content delivery operation.

### Description of Embodiments

### (1) Overview

Note that the embodiment to be described below is only an exemplary one of various embodiments of the present disclosure and should not be construed as limiting. Rather, the exemplary embodiment may be readily modified in various manners depending on a design choice or any other factor without departing from the scope of the present disclosure.

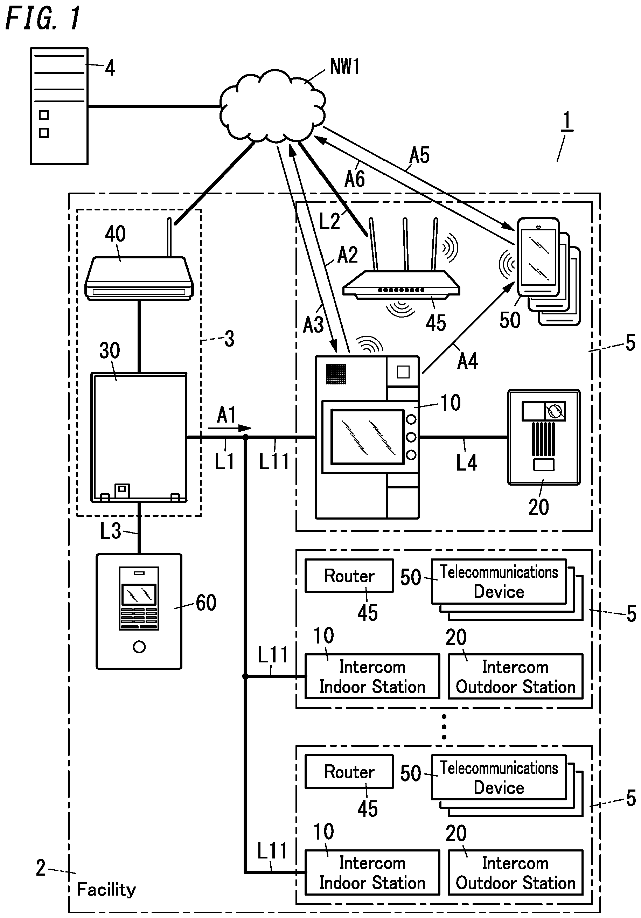

A delivery system 1 according to this embodiment includes a plurality of (e.g., three in the example illustrated in FIG. 1) intercom indoor stations 10 and a delivery notification system 3 as shown in FIG. 1. Each of the intercom indoor stations 10 is installed in an assigned one of a plurality of management areas 5 that a facility 2 has and connected to a trunk line L1 of an intercom line.

In this embodiment, the facility 2 is supposed to be a multi-family dwelling house (what is called "mansion" in Japan) as an example. Therefore, the plurality of management areas 5 correspond to a plurality of dwelling units. In short, the delivery system 1 according to this embodiment is supposed to be used as an intercom system for a multi-family dwelling house. The delivery system 1 may include not only the intercom indoor stations 10 and the delivery notification system 3 but also a lobby intercom station 60 installed at the main entrance of a common area, and intercom outdoor stations (door phone stations) 20 installed at the respective dwelling units as shown in FIG. 1. However, the facility 2 does not have to be a multi-family dwelling house but may also be an office building, a commercial facility, a hotel, a hospital, a factory, a school, or a facility for the elderly. In the following description, the "user" will refer to a resident of (i.e., a person who lives in) each dwelling unit unless otherwise stated.

The delivery notification system 3 makes delivery notification through the trunk line L1 of an intercom line, to which the plurality of intercom indoor stations 10 are connected in the facility 2. The delivery notification system 3 includes a controller 30. Optionally, the delivery notification system 3 may include not only the controller 30 but also a router 40 as well, as shown in FIG. 1. The controller 30 may be installed in, for example, a manager's room of the multi-family dwelling house to relay signals to be transmitted and received between the lobby intercom station 60 and the respective intercom indoor stations 10.

The delivery system 1 according to this embodiment is a system designed to allow a business enterprise, a person, a group, or an agent specializing in delivering content information (hereinafter referred to as a "content provider") to deliver content information to a plurality of facilities 2.

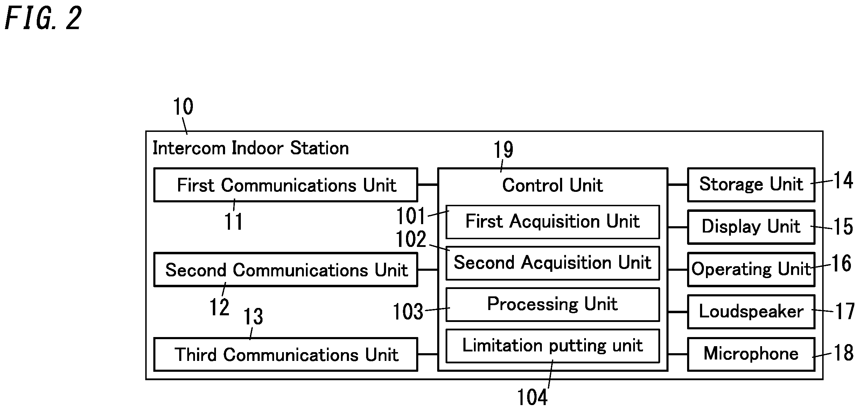

Each of the intercom indoor stations 10 according to this embodiment includes a first acquisition unit 101 and a second acquisition unit 102 as shown in FIG. 2. The first acquisition unit 101 is configured to receive notification information about the delivery of content information through the trunk line L1. The second acquisition unit 102 is configured to receive the content information corresponding to the notification information through a communication path L2 (see FIG. 1) other than the trunk line L1.

As used herein, the "content information" refers to data of a web content to be browsed at a website, for example, and includes data of a relatively large data size such as a still picture, a moving picture (video), music, or audio. Also, as used herein, the "notification information" includes the uniform resource locator (URL) as a link to a web content, for example, but does not include data of a relatively large size such as a still picture, a moving picture (video), music, or audio. The notification information suitably includes character data such as a sentence giving a brief description of content information to be delivered for the user. The first acquisition unit 101 suitably further receives authentication information (such as a one-time password) to access a resource located by the link.

According to this configuration, each intercom indoor station 10 receives the notification information through the trunk line L1 and also receives the content information itself through the communication path L2, not the trunk line L1. This reduces the communication load on the trunk line L1, compared to receiving the content information through the trunk line L1.

In addition, each intercom indoor station 10 receives content information corresponding to the notification information that the first acquisition unit 101 has received in advance. Therefore, according to this configuration, persons who attempt to access a website to acquire content information are not an unspecified large number of people but only users with a relatively high degree of reliability (such as residents of the multi-family dwelling house). This would ensure a sufficiently high degree of security for the content provider.

### (2) Details

### (2.1) Overall configuration

Next, an overall configuration for the delivery system 1 according to this embodiment will be described in detail with reference to FIG. 1. The delivery system 1 may be used, for example, as an intercom system for a multi-family dwelling house as already described in the "(1) Overview" section. The delivery system 1 includes the plurality of intercom indoor stations 10, the plurality of intercom outdoor stations 20, the lobby intercom station 60, the delivery notification system 3, a plurality of telecommunications devices 50, and a plurality of routers 45. Nevertheless, only the plurality of intercom indoor stations 10 and the delivery notification system 3 are essential constituent elements for the delivery system 1 and the other constituent elements are just optional, inessential ones. Also, in the example illustrated in FIG. 1, a single intercom indoor station 10, a single intercom outdoor station 20, and a single router 45 are provided for each management area 5 corresponding to a single dwelling unit. However, the number of each of these devices per management area is not particularly limited. For example, not just the intercom indoor station 10 but also an intercom indoor sub-station may be installed in each management area 5 as well.

The lobby intercom station 60 is an intercom station installed at a lobby (in a common area) of the facility 2 (multi-family dwelling house), for example. The lobby intercom station 60 is configured to communicate with (e.g., allow the visitor to speak to the resident and transmit a video signal to) each intercom indoor station 10. The lobby intercom station 60 is connected to the controller 30 of the delivery notification system 3 through a connection line L3, for example. The lobby intercom station 60 includes a speaking unit with a loudspeaker and a microphone, an operating unit (including a plurality of press button switches and a touchscreen panel) to accept the visitor's operations, and an image capturing unit for capturing an image of a particular area that covers at least the visitor's face.

Each of the intercom indoor stations 10 is a dwelling unit station (intercom living room station) installed in an associated management area 5 of the facility 2 corresponding to each dwelling unit of the multi-family dwelling house, for example. Each intercom indoor station 10 is connected to an associated branch line L11, out of a plurality of branch lines L11 branching at a switch (not shown) from the trunk line L1 connected to the controller 30. That is to say, each intercom indoor station 10 is connected to the controller 30 through the trunk line L1 and is able to communicate with the lobby intercom station 60 via the controller 30.

Each of the intercom outdoor stations 20 is a door phone station installed at the entrance door of its assigned management area 5, i.e., its associated dwelling unit of the multi-family dwelling house, for example. Each intercom outdoor station 20 includes a speaking unit (including a loudspeaker and a microphone), a call button, and an image capturing unit for capturing an image of a particular area that covers at least the visitor's face. Each intercom outdoor station 20 is connected to an associated intercom indoor station 10 through a connection line L4 and is configured to communicate with (e.g., allow the visitor to speak to the resident and transmit a video signal to) the intercom indoor station 10. Each of the trunk line L1, the branch lines L11, the connection line L3, and the connection line L4 may be implemented as a twisted pair cable, for example.

The delivery notification system 3 includes at least the controller 30. The delivery notification system 3 further includes a router 40, for example. The controller 30 is configured to relay, as its basic operation, signals to be transmitted and received between the lobby intercom station 60 and the plurality of intercom indoor stations 10. When a visitor specifies a particular dwelling unit by operating the operating unit of the lobby intercom station 60, the controller 30 sends a call signal to call the designated user up to the intercom indoor station 10 corresponding to the specified dwelling unit. That is to say, the controller 30 performs call control between the lobby intercom station 60 and each intercom indoor station 10. In addition, the controller 30 relays the conversation between the visitor and the resident and the transmission of a video signal generated by the image capturing unit of the lobby intercom station 60.

The controller 30 according to this embodiment performs not only the basic operation described above but also the operation of sending out, through the trunk line L1 toward the intercom indoor stations 10 of the respective management areas 5, notification information about the delivery of content information transmitted from a server device 4. This operation will be hereinafter referred to as "content notification operation." The controller 30 is connected, via the router 40, to a network NW1, which is a public network such as the Internet. The controller 30 receives the notification information from the server device 4 connected to the network NW1. The controller 30 and the content notification operation will be described in detail later in the "(2.2) Controller" section.

The server device 4 according to this embodiment is a server device (which may be a rental server) that the content provider owns or manages, and is not a constituent element of the delivery notification system 3. However, this is only an example and should not be construed as limiting. Alternatively, the server device 4 may also be a constituent element of the delivery notification system 3. In that case, another server device (not shown) that the content provider owns or manages may be provided separately and notification information provided by that server device may be received once at the server device 4 over the network NW1. Optionally, the server device 4 may aggregate the notification information received from the respective server devices of various content providers, perform data processing by assigning address information to the notification information, and then transmit the notification information with the address information to the controllers 30 of the respective facilities 2. The notification information received at a time by each controller 30 may include a plurality of URLs (links) to the content information to be delivered by a plurality of content providers.

Each of the telecommunications devices 50 is supposed to be a mobile telecommunications device such a smartphone. Each user (i.e., each of the residents of a dwelling unit in this example) has his or her own telecommunications device 50. In FIG. 1, three telecommunications devices 50 owned by three residents are illustrated for each management area 5.

In each management area 5, installed is a router 45. The router 45 is connected wirelessly to the intercom indoor station 10 in its management area 5 and the telecommunications devices 50 in compliance with a wireless communication protocol such as Wi-Fi®. The intercom indoor station 10 is able to communicate, via the router 45, with any of the telecommunications devices 50 present within a predetermined area.

Specifically, a dedicated application software (communication application software) program has been installed in each telecommunications device 50. By starting the application software program by itself, the telecommunications device 50 is able to communicate with the intercom indoor station 10. As used herein, the "predetermined area" is an area that covers at least a part of the management area 5, and may be almost the entire management area 5 (i.e., within the assigned dwelling unit) in this embodiment. The intercom indoor station 10 relays the communication (such as the conversation between the visitor and the resident and transmission and reception of video signals) between the lobby intercom station 60 or its associated intercom outdoor station 20 and the telecommunications devices 50. This allows the user who has his or her own telecommunications device 50 to speak, by using the telecommunications device 50 as a receiver and the intercom indoor station 10 as a relay, to the visitor who is operating either the lobby intercom station 60 or the intercom outdoor station 20, while viewing the video of the visitor.

As can be seen from the foregoing description, the intercom indoor station 10 relays, as its basic operations, the conversation between the visitor and the resident over either the lobby intercom station 60 or the intercom outdoor station 20, reception of video signals, and transmission of signals to the telecommunications devices 50. The intercom indoor station 10 according to this embodiment performs not only these basic operations but also another type of operation on the notification information sent out from the controller 30 (which will be hereinafter referred to as "content delivery operation"). The intercom indoor station 10 and the content delivery operation will be described in detail later in the "(2.3) Intercom indoor station" section.

### (2.2) Controller

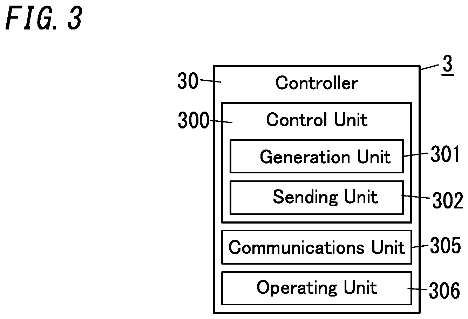

Next, the configuration of the controller 30 of the delivery notification system 3 will be described in detail. As shown in FIG. 3, the controller 30 includes a control unit 300 and a communications unit 305. The controller 30 is installed in the manager's room of the multi-family dwelling house, for example, and relays, as its basic operation, signals to be transmitted and received between the lobby intercom station 60 and the respective intercom indoor stations 10.

The communications unit 305 may be made up of first, second, and third interface units. The first interface unit is electrically connected to the lobby intercom station 60 through the connection line L3 (see FIG. 1). The second interface unit is electrically connected to the intercom indoor station 10 in each management area 5 through the trunk line L1 and the branch line L11 (see FIG. 1). The third interface unit is a communications interface to communicate with the router 40 (see FIG. 1) either wirelessly or via a cable.

The control unit 300 is implemented as a microcomputer including, as major constituent elements, a processor and a memory, for example. The microcomputer performs the function of the control unit 300 by making the processor execute a program stored in the memory, thus carrying out the function of controlling the communications unit 305 and other constituent elements. In this embodiment, the program to be executed by the processor is stored in advance in the memory of the microcomputer. However, this is only an example and should not be construed as limiting. The program may also be distributed after having been stored in a non-transitory storage medium such as a memory card or downloaded via a telecommunications line such as the Internet.

The control unit 300 relays, as its basic operation, a communication signal transmitted from the lobby intercom station 60 and makes the second interface unit of the communications unit 305 transmit the communication signal to a specified one of the intercom indoor stations 10. In this case, the communication signal transmitted from the lobby intercom station 60 includes information (such as an address) specifying the intercom indoor station 10 as its destination. This allows only a particular intercom indoor station 10, of which the assigned address matches the address included in the communication signal, out of the plurality of intercom indoor stations 10 to receive the communication signal. In addition, the control unit 300 relays, as its basic operation, the communication signals transmitted from the plurality of intercom indoor stations 10, and makes the first interface unit of the communications unit 305 transmit the communication signals to the lobby intercom station 60.

The control unit 300 according to this embodiment is configured to perform not only the basic operations described above but also the content notification operation of sending out, through the trunk line L1, the notification information, received from the server device 4, toward the intercom indoor stations 10 in the respective management areas 5.

Specifically, the control unit 300 includes a generation unit 301 and a sending unit 302 as shown in FIG. 3. The generation unit 301 is configured to generate notification information about the delivery of content information. The sending unit 302 is configured to make the second interface unit of the communications unit 305 send out (as indicated by the arrow A1 in FIG. 1), through the trunk line L1, the notification information that has been generated by the generation unit 301. In addition, the sending unit 302 may further send out, through the trunk line L1, authentication information to permit or deny access to the server device 4 that manages the content information. The authentication information may be sent out either along with (i.e., at the same timing as) the notification information or a different timing from the notification information. The authentication information is suitably a one-time password. Note that the authentication information does not have to be sent out.

As used herein, the generation unit's 301 generation of the notification information includes generating data of notification information from nothing and performing formal data processing (or modification) on the notification information received from the server device 4. In this embodiment, the server device 4 is basically supposed to transmit the notification information toward the controllers 30 of the respective facilities 2, and therefore, the generation unit 301 performs only formal data processing on the notification information received. For example, the notification information received from the server device 4 includes address information unique to the controller 30 to specify the facility 2. If this address information is unnecessary for the respective intercom indoor stations 10 at the lower level of the hierarchy, then the address information may be deleted (which is an example of formal data processing).

The sending unit 302 according to this embodiment sends out at a time (i.e., broadcasts) the notification information to all of the management areas 5 within the facility 2. However, if the notification information needs to be provided for only a particular management area 5, selected from all management areas 5, then the generation unit 301 may add the address information of the intercom indoor station 10 in the target management area 5 to (i.e., perform formal data processing on) the notification information. That is to say, the sending unit 302 may send out the notification information to only a particular intercom indoor station 10 among the plurality of intercom indoor stations 10 connected to the trunk line L1. This allows the destinations of the notification information to transmit to be adjusted on a management area 5 basis.

Optionally, the controller 30 may include an operating unit 306 that accepts a command entered by a human as shown in FIG. 3. The operating unit 306 may be implemented as a touchscreen display, for example. The generation unit 301 may generate, from nothing, data of the notification information based on the information entered by the manager in the manager's room through the operating unit 306, for example. This would deal with even the content provider's request of directly providing the notification information offline (i.e., a situation where no notification information is received from the server device 4). Optionally, the data of the notification information received from the server device 4 may be edited by a human (such as the manager in the manager's room) through the operating unit 306. Also, the particular management area 5 may be selected by specifying the address information of the intercom indoor station 10 through the operating unit 306.

If the server device 4 is a constituent element of the delivery notification system 3, then the server device 4 may perform the function of the generation unit 301 that generates the notification information and the function of the operating unit 306. Alternatively, a gateway located at a higher level than the controller 30 may perform formal data processing. In these cases, the controller 30 may send out, through the trunk line L1, the notification information received almost as it is, i.e., substantially without performing any data processing on the notification information.

### (2.3) Intercom indoor station

Next, the configuration of the intercom indoor station 10 will be described in detail. As shown in FIG. 2, the intercom indoor station 10 includes a first communications unit 11, a second communications unit 12, a third communications unit 13 (transmission unit, communications unit), a storage unit 14, a display unit 15, an operating unit 16, a loudspeaker 17, a microphone 18, and a control unit 19 for controlling all of these units.

The first communications unit 11 is a communications interface for communicating with the controller 30. The first communications unit 11 is electrically connected to the controller 30 through the trunk line L1 and the branch line L11. The first communications unit 11 is configured to communicate bidirectionally with the lobby intercom station 60 via the controller 30.

The second communications unit 12 is a communications interface for communicating with the intercom outdoor station 20. The second communications unit 12 is electrically connected to the intercom outdoor station 20 through the connection line L4. The second communications unit 12 is configured to communicate bidirectionally with the intercom outdoor station 20.

The third communications unit 13 is a communications interface for communicating with the router 45 by wireless communication. Alternatively, the third communications unit 13 may be electrically connected to the router 45 via a LAN cable, instead of being connected to the router 45 by wireless communication. The third communications unit 13 is configured to communicate bidirectionally, via the router 45, with the telecommunications devices 50 present within a predetermined area. In this embodiment, the router 45 is connected to the network NW1, which is a public network such as the Internet (see the communication path L2 shown in FIG. 1). The third communications unit 13 is configured to communicate bidirectionally, via the router 45, with the server device 4 connected to the network NW1.

The display unit 15 may be implemented as a touchscreen panel display, for example. The display unit 15 is configured to display the video that the first communications unit 11 has received from the lobby intercom station 60 and the video that the second communications unit 12 has received from the intercom outdoor station 20. The display unit 15 according to this embodiment is configured to further display the notification information about the delivery of content information and the content information itself. The user is allowed to perform various types of settings and operations (such as changing the volume settings of voices and calling sounds emitted, and the operation of reproducing past video captured by the image capturing unit and recording video) by touching the buttons on the display unit 15.

The operating unit 16 includes various types of input buttons (such as conversation start and end buttons), which are arranged around the display unit 15 implemented as a touchscreen panel display.

The loudspeaker 17 and the microphone 18 together form a speaking unit of the intercom indoor station 10. A digital audio signal received at the first communications unit 11 (or the second communications unit 12) is converted (i.e., demodulated) into an analog audio signal, which is then emitted through the loudspeaker 17. The voice picked up by the microphone 18 is supplied as an analog audio signal from the microphone 18 to the first communications unit 11 (or the second communications unit 12). The analog audio signal is then converted into a digital audio signal, which is transmitted to the lobby intercom station 60 (or the intercom outdoor station 20). When the visitor operates the operating unit of the lobby intercom station 60 (or presses the call button of the intercom outdoor station 20), a call signal is received. In response, a calling sound to call the user (resident) up is emitted from the loudspeaker 17.

The storage unit 14 is a programmable memory, of which the data is rewritable, and is suitably a nonvolatile memory. The storage unit 14 stores the video captured by the respective image capturing units of the lobby intercom station 60 and the intercom outdoor station 20, for example. In addition, the storage unit 14 also stores the notification information received from the controller 30 and the content information received from the server device 4. The storage unit 14 further stores identification information (such as addresses) to identify the telecommunications device(s) 50 that a single or a plurality of users as the resident(s) of the associated dwelling unit own(s). In addition, the storage unit 14 further stores various other types of setting information as well.

The control unit 19 includes the first acquisition unit 101, the second acquisition unit 102, and a processing unit 103. The control unit 19 is implemented as a microcomputer including, as major constituent elements, a processor and a memory, for example. The microcomputer performs the function of the control unit 19 by making the processor execute a program stored in the memory, thus carrying out the function of controlling the first communications unit 11, the second communications unit 12, the third communications unit 13, the storage unit 14, the display unit 15, the operating unit 16, and other constituent elements. In this embodiment, the program to be executed by the processor is stored in advance in the memory of the microcomputer. However, this is only an example and should not be construed as limiting. The program may also be distributed after having been stored in a non-transitory storage medium such as a memory card or downloaded via a telecommunications line such as the Internet.

The first acquisition unit 101 is configured to receive the notification information about the delivery of content information via the first communications unit 11. The second acquisition unit 102 is configured to receive the content information corresponding to the notification information via the third communications unit 13. That is to say, the second acquisition unit 102 receives the content information corresponding to the notification information from the server device 4 through the communication path L2 other than the trunk line L1.

The processing unit 103 is configured to perform various types of processing (including audio processing, video processing, and network information processing) that are the basic operations as the intercom indoor station. The audio processing includes noise reduction, echo reduction, and other types of processing to be performed on the audio information received at the first communications unit 11 or the second communications unit 12, for example. The video processing includes distortion correction, zoom in, zoom out, trimming, and other types of image processing on the video information received at either the first communications unit 11 or the second communications unit 12. The network information processing includes the processing of generating network information based on the audio information and video information received at the first communications unit 11 or the second communications unit 12 and outputting the network information from the third communications unit 13 toward the telecommunications devices 50, for example.

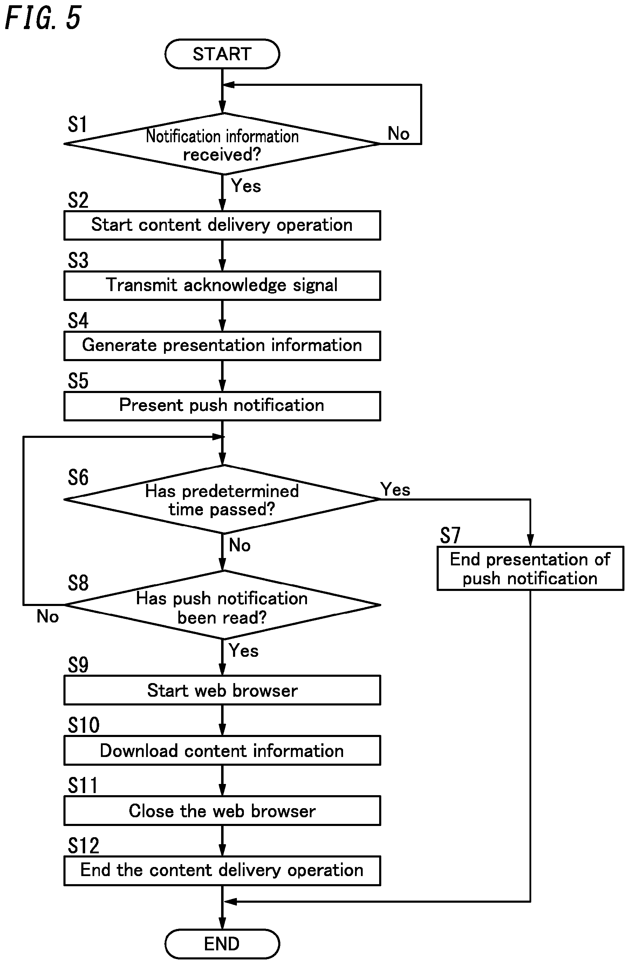

In this embodiment, the processing unit 103 is configured to perform the content delivery operation as well. The content delivery operation will be described with reference to the flowchart shown in FIG. 5. In the following description, the notification information provided by the server device 4 is supposed to be delivered by so-called "push notification," which is push information delivery for delivering information without requiring any active operation by the user, as an example.

When the first acquisition unit 101 receives notification information from the controller 30 via the trunk line L1, the branch line L11, and the first communications unit 11 (if the answer is YES in Step S1), the processing unit 103 starts to perform the content delivery operation (in Step S2). The notification information includes the URL as a link to a web content to be delivered and character data such as a sentence giving a brief description of the content information to be delivered for the user. In addition, the notification information suitably further includes the name of the content provider and the date and time when the server device 4 transmitted the notification information. Nevertheless, the notification information does not include any data of a relatively large data size such as a still picture, a moving picture (video), music, or audio.

First of all, the processing unit 103 generates a response signal (acknowledge signal) acknowledging the safe receipt of the notification information for the server device 4 that manages the notification information. The processing unit 103 makes the third communications unit 13 (transmission unit) transmit the response signal thus generated through the communication path L2 other than the trunk line L1 as indicated by the arrow A2 in FIG. 1 (in Step S3). This reduces the communication load on the trunk line L1, compared to, for example, a situation where in response to simultaneous broadcast of the notification information to the respective management areas 5, acknowledge signals are returned at a time from the respective management areas 5 through the trunk line L1.

Subsequently, the processing unit 103 presents content based on the notification information. Specifically, the processing unit 103 generates, based on the notification information, presentation information by subjecting the notification information to formal processing (such as format conversion) such that the notification information may be data to be presented on the display unit 15 (in Step S4). In this embodiment, the notification information is supposed to be delivered from the server device 4 by push notification as an example, as described above. For that purpose, a dedicated application software program for performing the push notification function, which has been provided in advance by the content provider, for example, has been installed in the intercom indoor station 10. The processing unit 103 may start the application software program and present, on the display unit 15, the notification information just as delivered.

Examples of the character information included in the presentation information include simple messages providing an announcement of an event such as "information about fireworks festival to be held on August 1" and an advertisement saying "a new supermarket will be open." The simple messages are extracted from the character data included in the notification information and generated with or without processing.

Also, if the first acquisition unit 101 has received the authentication information, then the processing unit 103 generates presentation information including the authentication information. The authentication information is used to limit access to the website managed by the content provider to authenticated users, and is a piece of information required for the content provider to authenticate the users. Distributing the authentication information further curbs the decline in security for the content provider.

The processing unit 103 according to this embodiment presents the presentation information to the user (i.e., presents the push notification) via the display unit 15 (in Step S5). When the push notification presented remains ignored for a predetermined amount of time (i.e., if the answer is YES in Step S6), the presentation of the push notification ends automatically (in Step S7). Alternatively, the push notification may continue being presented until the user touches the display unit 15. At this time, the processing unit 103 makes the storage unit 14 store push notification presentation information such that the user is allowed to check a list of push notifications presented in the past. Optionally, an old piece of presentation information that was received from the controller 30 more than a week ago, for example, may be erased automatically. Alternatively, the user may manually erase such an old piece of presentation information by operating the touchscreen panel display of the display unit 15.

As used herein, the push notification includes a deep link including a URL specified. If the user responds to read the push notification via the display unit 15 (i.e., if the answer is YES in Step S8) before a predetermined amount of time passes (i.e., if the answer is NO in Step S6), then the processing unit 103 starts a web browser installed in the intercom indoor station 10 (in Step S9). In addition, the processing unit 103 allows an automatic jump from a page of the website currently displayed on the display unit 15 to a page of the website with the URL specified by the deep link. That is to say, the intercom indoor station 10 accesses the server device 4 as indicated by the arrow A2 in FIG. 1. Then, the content information corresponding to the notification information starts to be downloaded (received) (in Step S10). The content information is data of a web content which is viewable at a website, and includes data of a relatively large data size such as a still picture, a moving picture (video), music or audio.

That is to say, the second acquisition unit 102 transmits a request signal, requesting the content information, to the server device 4 through the communication path L2 on finding that the user has responded to read the push notification (i.e., the transmission of the request signal is triggered by the user's response to read the push notification). Then, the second acquisition unit 102 receives, through the communication path L2, the content information from the server device 4 via the network NW1, the router 45, and the third communications unit 13 (as indicated by the arrow A3 in FIG. 1). If the first acquisition unit 101 has received the authentication information, the content information does not start to be downloaded immediately, but first, a webpage for entering the authentication information is displayed on the display unit 15. The user enters the password (authentication information) that has been displayed in advance as presentation information on the display unit 15 into the blank space on the webpage. When the password is verified by the server device 4, the content information starts to be downloaded.

The user may view, through the webpage of the website displayed on the display unit 15, either a still picture or a moving picture, which is a piece of content information corresponding to the notification information. For example, if the notification information is information about the announcement of a fireworks festival to be held in the neighborhood of the multi-family dwelling house, then the user may view, via the display unit 15, either a still picture or a moving picture, stored in the server device 4 managed by the organizer of the fireworks festival (content provider) and representing highlights of the fireworks festival.

Thereafter, when the user performs, on the display unit 15, the operation of closing the web browser (in Step S11), the processing unit 103 ends the content delivery operation (in Step S12).

As can be seen, the intercom indoor station 10 receives the notification information through the trunk line L1 but receives the content information itself through the communication path L2, not the trunk line L1. This reduces the communication load on the trunk line L1 compared to receiving the content information through the trunk line L1.

Furthermore, the intercom indoor station 10 receives the content information corresponding to the notification information that the first acquisition unit 101 has received in advance. Therefore, persons who attempt to access a website to acquire the content information are not an unspecified large number of people but a plurality of users (such as residents of the multi-family dwelling house), to which the notification information has actually been transmitted, i.e., only users with a relatively high degree of reliability. This would ensure a sufficiently high degree of security for the content provider. In particular, even though the content provider needs to deliver information to as many users as possible, there is a concern about a decline in security in terms of information management. In this respect, delivering information on a facility 2 basis (e.g., within a particular multi-family dwelling house) using the delivery system 1 according to this embodiment would further curb the decline in security while satisfying their needs.

### (2.4) Transfer function to telecommunications devices

The intercom indoor station 10 according to this embodiment is configured to not only present, on its own display unit 15, the notification information received from the controller 30 but also transfer the notification information to telecommunications device 50 as well. Meanwhile, the telecommunications device 50 presents, on its own display unit 504 (implemented as a touchscreen panel display), content based on the notification information transferred. In this embodiment, the telecommunications device 50 may present the push notification as well as the intercom indoor station 10, for example. In the telecommunications device 50, a dedicated application software program for performing the push notification function, which has been distributed in advance by the content provider, is installed. Next, a configuration for the telecommunications device 50 will be described.

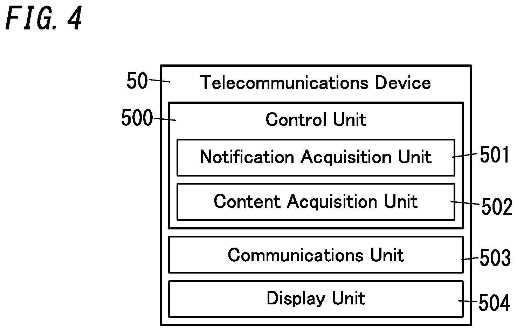

The telecommunications device 50 includes a control unit 500, a communications unit 503, and a display unit 504 as shown in FIG. 4. The communications unit 503 is a communications interface for communicating with the router 45. When present within a predetermined area (such as within the dwelling unit), the telecommunications device 50 is able to communicate, via the router 45, with the intercom indoor station 10 or the server device 4 connected to the network NW1.

The control unit 500 is implemented as a microcomputer including, as major constituent elements, a processor and a memory, for example. The microcomputer performs the function of the control unit 500 by making the processor execute a program stored in the memory. In this embodiment, the program to be executed by the processor is stored in advance in the memory of the microcomputer. However, this is only an example and should not be construed as limiting. The program may also be distributed after having been stored in a non-transitory storage medium such as a memory card or downloaded via a telecommunications line such as the Internet.

The control unit 500 performs the processing to allow the user of the telecommunications device 50 to speak to the visitor using the intercom indoor station 10 as a relay, as already described in the "(2.1) Overall configuration" section. Furthermore, the control unit 500 includes a notification acquisition unit 501 and a content acquisition unit 502 as shown in FIG. 4. The notification acquisition unit 501 is configured to receive, from the intercom indoor station 10, the notification information (about the delivery of content information) that the intercom indoor station 10 has received through the trunk line L1 (as indicated by the arrow A4 in FIG. 1). The content acquisition unit 502 is configured to receive the content information corresponding to the notification information through the communication path L2 other than the trunk line L1 (as indicated by the arrow A5 in FIG. 1).

When the notification acquisition unit 501 receives the notification information from the intercom indoor station 10, the control unit 500 presents the push notification. When the user who carries the telecommunications device 50 with him or her responds to read the push notification by touching the display unit 504, the web browser installed in the telecommunications device 50 is started to make an automatic jump to the website with the specified URL That is to say, the telecommunications device 50 accesses the server device 4 as indicated by the arrow A6 in FIG. 1. Then, the content information corresponding to the notification information starts to be downloaded (received).

That is to say, the content acquisition unit 502 transmits a request signal, requesting the content information, to the server device 4 through the communication path L2 on finding that the user has responded to read the push notification (i.e., the transmission of the request signal is triggered by the user's response to read the push notification). Then, the content acquisition unit 502 receives, through the communication path L2, the content information from the server device 4 via the network NW1, the router 45, and the communications unit 503. If the notification acquisition unit 501 has received the authentication information, the content information does not start to be downloaded immediately, but first, a webpage for entering the authentication information is displayed on the display unit 504. The user enters the password (authentication information) that has been displayed in advance into the blank space on the webpage. When the password is verified by the server device 4, the content information starts to be downloaded.

If an intercom indoor sub-station is installed within the management area 5, then intercom indoor station 10 suitably transfers the notification information to not only the telecommunications device 50 but also the intercom indoor sub-station as well.

### (2.5) Limiting transfer destinations

Next, it will be described how to put limitations on the telecommunications devices 50 as destinations to which the notification information is transferred. As shown in FIG. 2, the control unit 19 of the intercom indoor station 10 further includes a limitation putting unit 104 to put limitations on destinations of the notification information transmitted such that either the telecommunications device 50 or at least a designated one of a plurality of telecommunications devices 50, including the telecommunications device 50, is permitted to receive, or prohibited from receiving, the notification information. That is to say, the intercom indoor station 10 has the function of limiting the number of telecommunications devices 50 to which the notification information may be transferred. According to the default setting, the notification information is transferred to all telecommunications devices 50 that are pre-registered with the storage unit 14 of the intercom indoor station 10. Meanwhile, when settings are entered, on the display unit 15, to enable the function of the limitation putting unit 104, the following processing is performed.

In this embodiment, the display unit 15 (touchscreen display) is configured to allow the user to enter, through touch operations, a transfer flag indicating whether or not to transfer the notification information to each of the telecommunications devices 50 pre-registered with the storage unit 14. The transfer flag is stored in the storage unit 14 in association with the address information of each telecommunications device 50. When the first acquisition unit 101 receives the notification information, the processing unit 103 notifies the limitation putting unit 104 of the reception of the notification information. The limitation putting unit 104 refers to the transfer flags stored in the storage unit 14 to determine whether or not there are any telecommunications devices 50 to exclude (or remove). If the answer is YES, the limitation putting unit 104 notifies the processing unit 103 that those telecommunications devices 50 should be removed from the telecommunications devices 50 as transfer destinations. As a result, the intercom indoor station 10 transmits notification information to only the telecommunications devices 50 that have not been removed by the limitation putting unit 104.

As can be seen, providing the limitation putting unit 104 for the control unit 19 allows telecommunications devices 50 carried by kids, for example, to be removed from the list of telecommunications devices 50 to which the notification information is transferred.

The display unit 15 may also be configured to further accept the entry of a particular keyword from the user. The particular keyword is stored in the storage unit 14 in association with the address information of the telecommunications devices 50 to exclude (or remove). In that case, when the first acquisition unit 101 receives the notification information, the limitation putting unit 104 determines, while referring to the particular keyword in the storage unit 14, whether or not there is any particular keyword that matches the character data in the notification information. When finding any particular keyword that matches, the limitation putting unit 104 removes the telecommunications device 50, of which the address information is associated with the particular keyword, from the list of telecommunications devices 50 as transfer destinations.

In some cases, when the first acquisition unit 101 of the intercom indoor station 10 receives the notification information, the user who carries the telecommunications device 50 could be away from home and absent from the management area 5. That is to say, when the first acquisition unit 101 receives the notification information, the telecommunications device 50 could be outside of the predetermined area (e.g., within the dwelling unit) in which the telecommunications device 50 is able to communicate with the intercom indoor station 10 via the router 45. In that case, the intercom indoor station 10 would be unable to transfer the notification information received at the first acquisition unit 101 to the telecommunications device 50 immediately.

Thus, when finding the telecommunications device 50 absent from the predetermined area when the first acquisition unit 101 receives the notification information, the control unit 19 of the intercom indoor station 10 has the notification information received pooled in the storage unit 14. Thereafter, on sensing the telecommunications device 50 enter the predetermined area (i.e., when finding that the user has come home), the control unit 19 makes the third communications unit (communications unit) transmit the notification information pooled to the telecommunications device 50. Thus, even if the intercom indoor station 10 receives the notification information while the user is away from home and is unable to notify the telecommunications device 50 carried by the user of the reception of the notification information, the user may still be notified of the reception when he or she comes home.

### (3) Variations

Some variations will be enumerated one after another. In the following description, the exemplary embodiment described above will be referred to as a "basic example."

In the basic example described above, the same single server device 4 transmits the notification information to the controllers 30 of the respective facilities 2 and is supposed to be the only storage location of the content information (i.e., the destination of the link). However, this is only an example and should not be construed as limiting. Alternatively, two different server devices may transmit the notification information and store the content information, respectively. Also, in the basic example described above, the server device 4 that stores the content information performs authentication processing on the user who demands access to the content information. However, this is only an example and should not be construed as limiting. Alternatively, a server device that performs authentication processing and a server device that stores the content information may be provided separately from each other.

Furthermore, in the basic example described above, the notification information is delivered by push information delivery (push notification) that requires no active operations by the user. However, the notification information does not have to be delivered by push notification. Alternatively, the notification information may also be delivered by email notification or any other pull information delivery that requires active operations by the user. Nevertheless, the user may be notified with more reliability by push notification rather than by email notification, for example. In addition, the push notification also saves the user the trouble of starting an application software program by him- or herself, thus eliminating a time-consuming job for the user.

Furthermore, the still picture or moving picture of the content information downloaded may be stored in the storage unit 14 so as to be viewed by the user later at an arbitrary timing via either the intercom indoor station 10 or the telecommunications device 50 (even without entering the authentication information again).

Furthermore, in the basic example described above, if the first acquisition unit 101 of the intercom indoor station 10 has received the authentication information, then the processing unit 103 of the intercom indoor station 10 adds the authentication information to the presentation information in order to present the authentication information to the user. However, this is only an example and should not be construed as limiting. Even if the first acquisition unit 101 has received the authentication information, the processing unit 103 does not always have to present the authentication information to the user or add the authentication information to the presentation information. That is to say, the second acquisition unit 102 of the intercom indoor station 10 (or the content acquisition unit 502 of the telecommunications device 50) may embed the authentication information in a request signal for requesting content information and transmit the request signal to the server device 4 automatically without making the user conscious of the authentication information.

The same functions as those of the intercom indoor station 10 (mostly, that of its control unit 19), the telecommunications device 50 (mostly, that of its control unit 500), and delivery notification system 3 of the basic example may also be implemented as a control method, a computer program, or a non-transitory storage medium that stores a program thereon. In this embodiment, the intercom indoor station 10, the telecommunications device 50, the delivery notification system 3, or the agent that performs the control method includes a computer system. The computer system may include, as principal hardware components, a processor and a memory. The functions of the intercom indoor station 10, the telecommunications device 50, the delivery notification system 3, or the agent that performs the control method may be performed by making the processor execute a program stored in the memory of the computer system. The program may be stored in advance in the memory of the computer system. Alternatively, the program may also be downloaded through a telecommunications line or be distributed after having been recorded in some storage medium such as a memory card, an optical disc, or a hard disk drive, any of which is readable for the computer system. The processor of the computer system may be made up of a single or a plurality of electronic circuits including a semiconductor integrated circuit (IC) or a largescale integrated circuit (LSI). Those electronic circuits may be either integrated together on a single chip or distributed on multiple chips, whichever is appropriate. Those multiple chips may be integrated together in a single device or distributed in multiple devices without limitation.

The intercom indoor station 10 of the basic example described above is implemented as a single device. However, this is only an example and should not be construed as limiting. Alternatively, at least one of the functions of the first acquisition unit 101, the second acquisition unit 102, the processing unit 103, and the limitation putting unit 104 in the control unit 19 of the intercom indoor station 10 may be distributed in two or more devices. Likewise, at least one of the functions of the generation unit 301 and the sending unit 302 of the controller 30 of the delivery notification system 3 may be distributed in two or more devices. Still alternatively, at least some functions of each of the intercom indoor station 10, the telecommunications device 50, and the delivery notification system 3 may be implemented as a cloud computing system as well.

### (4) Advantages

As can be seen from the foregoing description, an intercom indoor station 10 according to a first aspect is installed in each of a plurality of management areas 5 that a facility 2 has and connected to a trunk line L1 of an intercom line. The intercom indoor station 10 includes a first acquisition unit 101 and a second acquisition unit 102. The first acquisition unit 101 receives, through the trunk line L1, notification information about delivery of content information. The second acquisition unit 102 receives, through a communication path L2 other than the trunk line L1, the content information corresponding to the notification information. The first aspect contributes to reducing a communication load on the trunk line L1 while guaranteeing sufficient security.

An intercom indoor station 10 according to a second aspect, which may be implemented in conjunction with the first aspect, suitably presents content based on the notification information that has been delivered by push notification. The second aspect allows the user of the intercom indoor station 10 to be notified with more reliability, compared to email notification, for example. This also saves the user the trouble of starting an application software program by him- or herself, thus eliminating the time-consuming job for the user.

An intercom indoor station 10 according to a third aspect, which may be implemented in conjunction with the first or second aspect, suitably further includes a storage unit 14 and a communications unit (third communications unit 13). The communications unit (third communications unit 13) is suitably able to communicate with a telecommunications device 50 within a predetermined area that covers at least a part of an assigned one of the plurality of management areas 5. The storage unit 14 suitably stores, on finding the telecommunications device 50 absent from the predetermined area when the first acquisition unit 101 receives the notification information, the notification information received. The communications unit (third communications unit 13) suitably transmits, to the telecommunications device 50, the notification information stored in the storage unit 14 when sensing the telecommunications device 50 enter the predetermined area. The third aspect allows, even when the intercom indoor station 10 receives notification information while the user is away from home and unable to notify the telecommunications device 50 that the user carries with him or her of the reception of the notification information, the user to be notified of the reception when he or she comes home.

An intercom indoor station 10 according to a fourth aspect, which may be implemented in conjunction with the third aspect, suitably further includes a limitation putting unit 104 to put limitations on destinations of the notification information transmitted such that either the telecommunications device 50 or at least a designated one of a plurality of telecommunications devices 50, including the telecommunications device 50, is permitted to receive, or prohibited from receiving, the notification information. The fourth aspect is able to exclude a telecommunications device 50 that a kid carries, for example, from the list of telecommunications devices 50 to which the notification information is transmitted.

An intercom indoor station 10 according to a fifth aspect, which may be implemented in conjunction with any one of the first to fourth aspects, suitably further includes a transmission unit (third communications unit 13). The transmission unit (third communications unit 13) suitably transmits, through the communication path L2 other than the trunk line L1 to a server device 4 that manages the notification information, an acknowledge signal indicating that the notification information has been received safely. The fifth aspect further reduces the communication load on the trunk line L1, compared to a situation where notification information is broadcast at a time to all of the management areas 5 and acknowledge signals are returned at a time through the trunk line L1 from the respective management areas 5, for example.

A telecommunications device 50 according to a sixth aspect has the ability to communicate with an intercom indoor station 10 installed in each of a plurality of management areas 5 that a facility 2 has and connected to a trunk line L1 of an intercom line. The telecommunications device 50 includes a notification acquisition unit 501 and a content acquisition unit 502. The notification acquisition unit 501 receives, from the intercom indoor station 10, notification information about delivery of content information. The notification information has been received by the intercom indoor station 10 through the trunk line L1. The content acquisition unit 502 receives, through a communication path L2 other than the trunk line L1, the content information corresponding to the notification information. The sixth aspect contributes to reducing a communication load on the trunk line L1 while guaranteeing sufficient security.

A telecommunications device 50 according to a seventh aspect, which may be implemented in conjunction with the sixth aspect, suitably presents content based on the notification information that has been delivered by push notification. The seventh aspect allows the user of the telecommunications device 50 to be notified with more reliability, compared to email notification, for example. This also saves the user the trouble of starting an application software program by him- or herself, thus eliminating the time-consuming job for the user.

A delivery notification system 3 according to an eighth aspect makes delivery notification through a trunk line L1 of an intercom line, to which a plurality of intercom indoor stations 10 are connected in a facility 2 having a plurality of management areas 5. The delivery notification system 3 includes: a generation unit 301 to generate notification information about delivery of content information; and a sending unit 302 to send out, through the trunk line L1, the notification information that has been generated by the generation unit 301. The eighth aspect contributes to reducing a communication load on the trunk line L1 while guaranteeing sufficient security.

In a delivery notification system 3 according to a ninth aspect, which may be implemented in conjunction with the eighth aspect, the sending unit 302 suitably further sends out, through the trunk line L1, authentication information for use to permit or deny access to a server device 4 that manages the content information. The ninth aspect further curbs the decline in security for the provider that delivers the content information.

In a delivery notification system 3 according to a tenth aspect, which may be implemented in conjunction with the eighth or ninth aspect, the sending unit 302 suitably sends out the notification information to only a particular intercom indoor station 10 which is selected from a plurality of intercom indoor stations 10 connected to the trunk line L1. The tenth aspect allows the destinations to which the notification information is transmitted to be adjusted on a management area 5 basis.

A delivery system 1 according to an eleventh aspect includes: a plurality of the intercom indoor stations 10 according to any one of the first to fifth aspects; and the delivery notification system 3 according to any one of the eighth to tenth aspects. The eleventh aspect provides a delivery system 1 that is able to reduce a communication load on the trunk line L1 while guaranteeing sufficient security.

A program according to a twelfth aspect is designed to cause a computer system to perform functions of an intercom indoor station 10 installed in each of a plurality of management areas 5 that a facility 2 has and connected to a trunk line L1 of an intercom line. The program includes the steps of: receiving, through the trunk line L1, notification information about delivery of content information; and receiving, through a communication path L2 other than the trunk line L1, the content information corresponding to the notification information. The twelfth aspect provides the capabilities of reducing a communication load on the trunk line L1 while guaranteeing sufficient security.

A program according to a thirteenth aspect is designed to cause a computer system to perform functions of a telecommunications device 50 with the ability to communicate with an intercom indoor station 10 installed in each of a plurality of management areas 5 that a facility 2 has and connected to a trunk line L1 of an intercom line. The program includes the step of receiving, from the intercom indoor station 10, notification information about delivery of content information. The notification information has been received by the intercom indoor station 10 through the trunk line L1. The program further includes the step of receiving, through a communication path L2 other than the trunk line L1, the content information corresponding to the notification information. The thirteenth aspect provides the capabilities of reducing a communication load on the trunk line L1 while guaranteeing sufficient security.

A program according to a fourteenth aspect is designed to cause a computer system to perform functions of a delivery notification system 3 for making delivery notification through a trunk line L1 of an intercom line, to which a plurality of intercom indoor stations 10 are connected in a facility 2 having a plurality of management areas 5. The program includes the steps of: generating notification information about delivery of content information; and sending out, through the trunk line L1, the notification information that has been generated. The fourteenth aspect provides the capabilities of reducing a communication load on the trunk line L1 while guaranteeing sufficient security.

A control method according to a fifteenth aspect is a method for controlling a delivery notification system 3 that makes delivery notification through a trunk line L1 of an intercom line, to which a plurality of intercom indoor stations 10 are connected in a facility 2 having a plurality of management areas 5. The control method includes: generating notification information about delivery of content information; and sending out, through the trunk line L1, the notification information that has been generated. The fifteenth aspect provides a method for controlling a delivery notification system 3 that is able to reduce a communication load on the trunk line L1 while guaranteeing sufficient security.

### Reference Signs List

- 1: Delivery System
- 2: Facility
- 3: Delivery Notification System
- 301: Generation Unit
- 302: Sending Unit
- 4: Server Device
- 5: Management Area
- 10: Intercom Indoor Station
- 13: Third Communications Unit (Communications Unit, Transmission Unit)
- 14: Storage Unit
- 101: First Acquisition Unit
- 102: Second Acquisition Unit
- 104: Limitation Putting Unit
- 50: Telecommunications Device
- 501: Notification Acquisition Unit
- 502: Content Acquisition Unit
- L1: Trunk Line
- L2: Communication Path

## Claims

1. An intercom indoor station installed in each of a plurality of management areas that a facility has and connected to a trunk line of an intercom line, the intercom indoor station comprising:
a first acquisition unit configured to receive, through the trunk line, notification information about delivery of content information; and
a second acquisition unit configured to receive, through a communication path other than the trunk line, the content information corresponding to the notification information.

2. The intercom indoor station of claim 1, wherein
the intercom indoor station is configured to present content based on the notification information that has been delivered by push notification.

3. The intercom indoor station of claim 1 or 2, further comprising:
a storage unit; and
a communications unit with the ability to communicate with a telecommunications device within a predetermined area that covers at least a part of an assigned one of the plurality of management areas, wherein
the storage unit is configured to, on finding the telecommunications device absent from the predetermined area when the first acquisition unit receives the notification information, store the notification information received, and
the communications unit is configured to transmit, to the telecommunications device, the notification information stored in the storage unit when sensing the telecommunications device enter the predetermined area.

4. The intercom indoor station of claim 3, further comprising a limitation putting unit configured to put limitations on destinations of the notification information transmitted such that either the telecommunications device or at least a designated one of a plurality of telecommunications devices, including the telecommunications device, is permitted to receive, or prohibited from receiving, the notification information.

5. The intercom indoor station of any one of claims 1 to 4, further comprising a transmission unit configured to transmit an acknowledge signal to a server device through the communication path other than the trunk line, the acknowledge signal indicating that the notification information has been received safely, the server device managing the notification information,.

6. A telecommunications device with the ability to communicate with an intercom indoor station installed in each of a plurality of management areas that a facility has and connected to a trunk line of an intercom line, the telecommunications device comprising:
a notification acquisition unit configured to receive, from the intercom indoor station, notification information about delivery of content information, the notification information having been received by the intercom indoor station through the trunk line; and
a content acquisition unit configured to receive, through a communication path other than the trunk line, the content information corresponding to the notification information.

7. The telecommunications device of claim 6, wherein
the telecommunications device is configured to present content based on the notification information that has been delivered by push notification.

8. A delivery notification system for making delivery notification through a trunk line of an intercom line, to which a plurality of intercom indoor stations are connected in a facility having a plurality of management areas, the delivery notification system comprising:
a generation unit configured to generate notification information about delivery of content information; and
a sending unit configured to send out, through the trunk line, the notification information that has been generated by the generation unit.

9. The delivery notification system of claim 8, wherein
the sending unit is configured to further send out, through the trunk line, authentication information for use to permit or deny access to a server device that manages the content information.

10. The delivery notification system of claim 8 or 9, wherein
the sending unit is configured to send out the notification information to only a particular intercom indoor station which is selected from a plurality of intercom indoor stations connected to the trunk line.

11. A delivery system comprising:
a plurality of the intercom indoor stations of any one of claims 1 to 5; and
the delivery notification system of any one of claims 8 to 10.

12. A program designed to cause a computer system to perform functions of an intercom indoor station installed in each of a plurality of management areas that a facility has and connected to a trunk line of an intercom line, the program comprising the steps of:
receiving, through the trunk line, notification information about delivery of content information; and
receiving, through a communication path other than the trunk line, the content information corresponding to the notification information.

13. A program designed to cause a computer system to perform functions of a telecommunications device with the ability to communicate with an intercom indoor station installed in each of a plurality of management areas that a facility has and connected to a trunk line of an intercom line, the program comprising the steps of:
receiving, from the intercom indoor station, notification information about delivery of content information, the notification information having been received by the intercom indoor station through the trunk line; and
receiving, through a communication path other than the trunk line, the content information corresponding to the notification information.

14. A program designed to cause a computer system to perform functions of a delivery notification system for making delivery notification through a trunk line of an intercom line, to which a plurality of intercom indoor stations are connected in a facility having a plurality of management areas, the program comprising the steps of:
generating notification information about delivery of content information; and
sending out, through the trunk line, the notification information that has been generated.

15. A method for controlling a delivery notification system configured to make delivery notification through a trunk line of an intercom line, to which a plurality of intercom indoor stations are connected in a facility having a plurality of management areas, the method comprising:
generating notification information about delivery of content information; and
sending out, through the trunk line, the notification information that has been generated.
